# EUROPÄISCHE PATENTSCHRIFT

(11) **EP 0 474 072 B1**
(45) Veröffentlichungstag und Bekanntmachung des Hinweises auf die Patenterteilung: **15.12.1993**
(21) Anmeldenummer: 91114209.9
(22) Anmeldetag: 24.08.1991
(51) Int. Cl.: A01D 45/02

(54) **Als Vorsatzgerät für den Mähdrescher od.dgl. ausgebildetes Erntegerät zum Ernten von Mais oder anderen Körnerfrüchten**
Device for harvesting corn or other grain, fitting on combine-harvesters or the like
Dispositif pour la récolte du mais ou d'autres grains, adaptable aux moissonneuses-batteuses ou similaires

(30) Priorität: 07.09.1990 DE 4028468
(43) Veröffentlichungstag der Anmeldung: 11.03.1992
(73) Patentinhaber: Pick, Norbert, 64546 Mörfelden-Walldorf (DE)
(72) Erfinder: Pick, Norbert, 64546 Mörfelden-Walldorf (DE)
(74) Vertreter: Schönherr, Wolfgang

(56) Entgegenhaltungen:
- EP-A- 0 091 635
- EP-A- 0 355 441
- EP-A- 0 378 779
- US-A- 4 516 391
- US-A- 4 845 930

## Beschreibung

Die Erfindung betrifft ein als Vorsatzgerät für einen Mähdrescher od.dgl. ausgebildetes Erntegerät zum Ernten von Mais oder anderen Körnerfrüchten und zum nachfolgenden Zerkleinern der Pflanzenstengel, bestehend aus einer Einzugsvorrichtung und einem Pflückspalt zur Trennung der Kolben von der Pflanze und einer nachgeordneten Schneidvorrichtung zum Häckseln der Pflanzenstengel.

Aus der EP-A 0 091 635 ist ein Gerät zum Ernten von Mais oder anderen Körnerfrüchten bekannt, daß als Vorsatzgerät für einen Mähdrescher dient und bei dem durch ein Durchziehen von Pflanzenstengeln durch einen Pflückspalt eine Trennung der Kolben oder anderer Früchte von der Pflanze erfolgt. Bei diesem Gerät werden nach Verlassen des Pflückspaltes die Pflanzenstengel zwischen einer rotierenden Pflückwalze und einer feststehenden Teilummantelung eingequetscht und mit Hilfe eines feststehenden Messers gehäckselt.

Wie die praktische Erfahrung gezeigt hat, treten durch Verschleiß der Geräteteile Verschlechterungen der Arbeitsquatität auf, was die Leistungskapazität des Mähdreschers beträchtlich herabsetzt. Daher arbeiten auch heute noch der überwiegende Teil der Erntevorsätze ohne Zerkleinerungseinrichtung, wodurch sich durch nachfolgende notwendige Arbeitsgänge und Feldüberfahrten die Kosten und auch die Umweltbelastungen erheblich vergrößern.

Aufgabe der Erfindung ist es daher, ein Erntegerät der eingangs genannten Art derart auszubilden, daß der Antriebsleistungsbedarf und der Wartungsaufwand auf ein Minimum veringert und durch austauschbare Verschleißteile eine konstante Arbeitsqualität erreicht wird.

Zur Lösung dieser Aufgabe ist das Erntegerät dadurch gekennzeichnet, daß die Schneidvorrichtung zwei im Abstand angeordnete, gegenläufig drehbare Wellen aufweist, auf denen jeweils mindestens eine Schneidscheibe und der Schneidscheibe benachbart ein Sternelement angeordnet sind, wobei die Schneidränder der miteinander zusammmenwirkenden Schneidscheiben einander überlappend angeordnet sind und wobei jedes Sternelement an seiner der Schneidscheibe benachbarten Seite eine umlaufende Ausnehmung und im Abstand die Peripherie der Schneidscheibe überragende Zacken aufweist.

Vorteilhaft sind mehrere aus Schneidscheibe und Sternelement zusammengesetzte Baueinheiten auf einer gemeinsamen Welle angeordnet.

Vorteilhaft ist den miteinander zusammenwirkenden Schneidscheiben eine Druckvorrichtung zugeordnet.

Nach einer bevorzugten Ausführungsform sind die Schneidscheiben und/oder Sternelemente lösbar auf der Welle angeordnet.

Nach einer weiteren vorteilhaften Ausführungsform ist die Ausnehmung des Sternelementes tiefer als der Überdeckungsbereich zweier zusammenwirkender Schneidscheiben.

Die Erfindung ist in den Zeichnungen beispielhaft dargestellt. Es zeigen:
- Fig. 1: ein Maiserntegerät in Seitenansicht,
- Fig. 2: das Erntegerät im Schnitt nach A - B der Fig. 1
- Fig. 3: eine Draufsicht auf einen Ausschnitt des Schneidwalzenpaares.
- Fig. 4: die Schneidscheiben entsprechend der Fig. 2, jedoch in anderer Ausführungsform
- Fig. 5: eine Draufsicht auf einen Ausschnitt des Schneidscheibenpaares nach Fig. 4.

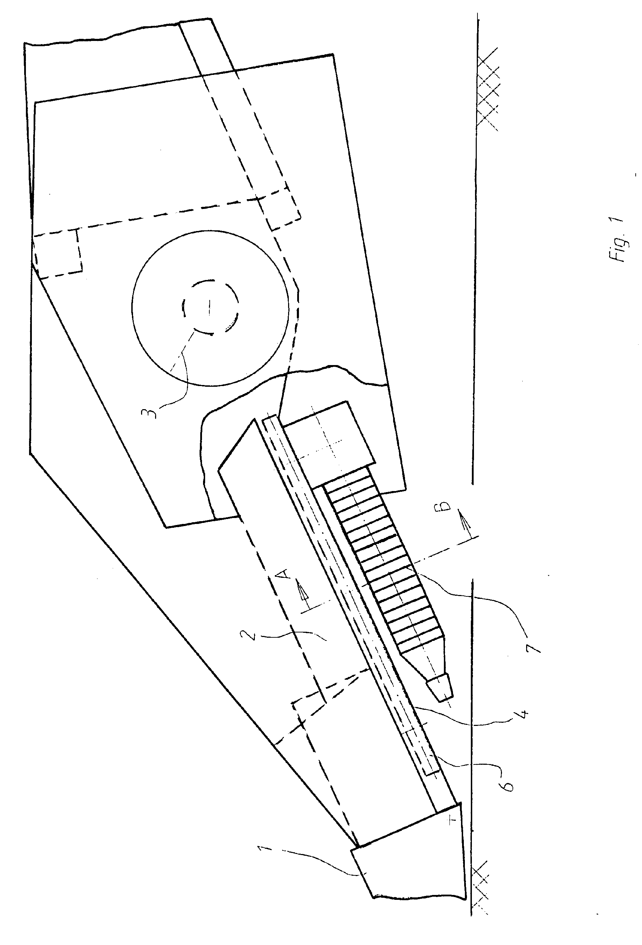

Das Maiserntegerät nach Fig. 1 weist Teiler (1), Führungbleche (2), eine Förderschnecke (3) mit anschließenden Schrägförderer zu einem Sammelbehälter oder einer Drescheinrichtung auf.

Ferner ist eine Einzugsvorrichtung (6) vorgesehen, unter der sich ein Pflückspalt (4) und darunter Schneidscheiben (7) befinden.

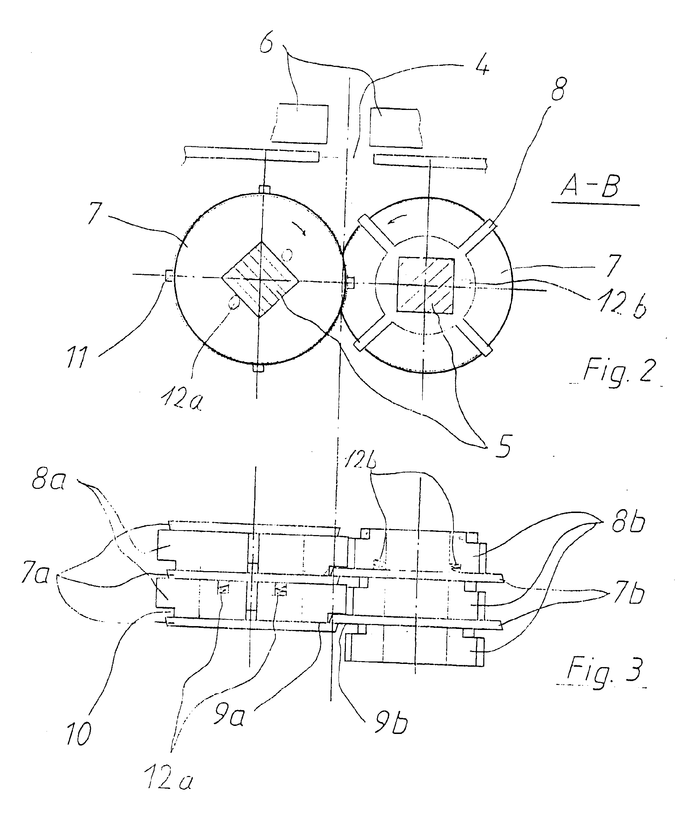

Nach Fig. 2 sind unterhalb der Einzugsvorrichtung (6) und des Pflückspaltes (4) im Abstand zwei gegenläufig drehbare Wellen (5) angeordnet, auf denen jeweils mindestens eine Schneidscheibe (7) und ein Sternelement (8) lösbar angeordnet sind.

Wie besonders Fig. 3 erkennen läßt, sind die Schneidscheiben (7a) und (7b) derart angeordnet, daß ihre Schneidränder (9a) bzw. (9b) überlappen. Jeder Schneidscheibe (7a) bzw. (7b) ist ein Sternelement (8a) bzw. (8b) zugeordnet. Jedes dieser Sternelemente hat an seiner der Schneidscheibe benachbarten Seite eine umlaufende Ausnehmung (10), in die der Rand der Schneidscheibe der anderen Schneidwalzenwelle ragt. Die Ausnehmung (10) des Sternelementes ist etwas tiefer als der Überdeckungsbereich zweier zusammenwirkender Schneidscheiben.

Jedes Sternelement hat außerdem im Abstand die Peripherie der Schneidscheibe überragende Zacken (11), die zum Einziehen der Stengel dienen.

Nach Fig. 3 sind mehrere aus Schneidscheibe und Sternelement zusammengesetzte Baueinheiten auf einer gemeinsamen Welle angeordnet.

Um stets einen guten Schnitt der miteinander Zusammenwirkenden Schneidscheiben zu gewährleisten, sind Druckvorrichtungen, z.B. in Form von Federn (12a und 12b) vorgesehen.

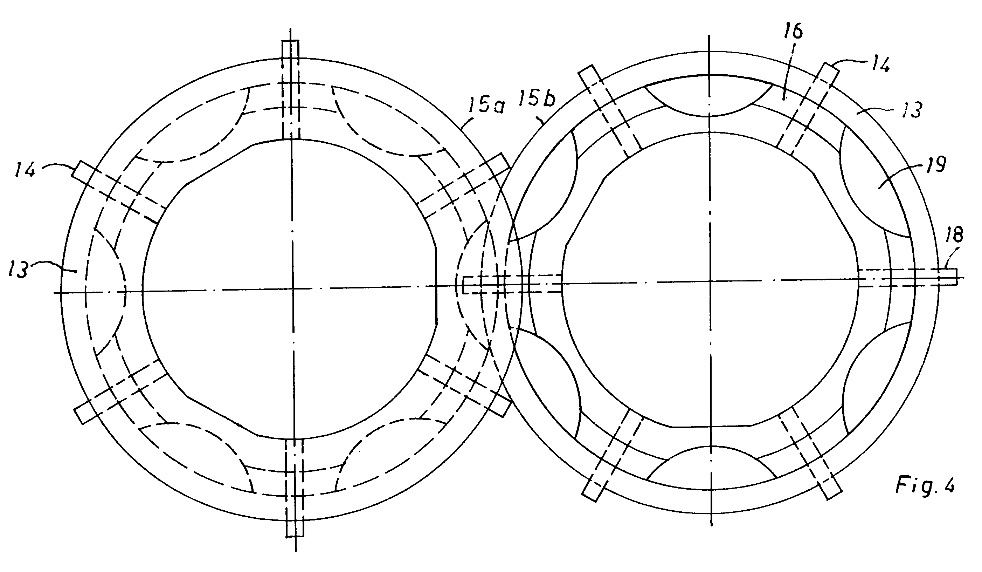

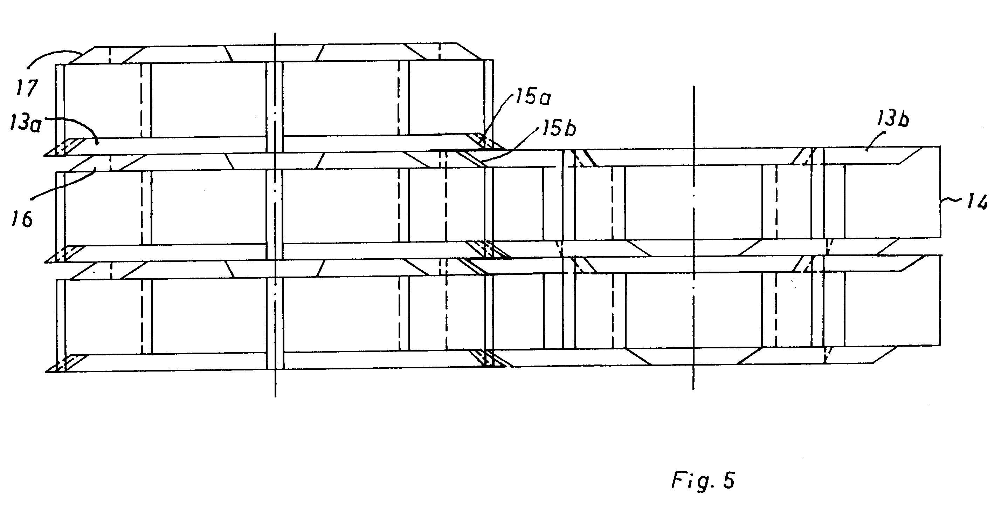

Bei der Ausführungsform nach den Fig. 4 und 5 sind wiederum unterhalb der Einzugsvorrichtung und des Pflückspaltes im Abstand zwei gegenläufig drehbare Wellen angeordnet, auf denen jeweils Schneidscheiben 13 und Sternelemente 14 lösbar angeordnet sind. Die Ränder 15 a und 15b zweier zusammenwirkender Schneidscheiben 13a und 13b sind einander überlappend angeordnet.

Um zu verhindern, daß sich zwischen die Ränder der zusammenwirkenden Schneidscheiben Schneidgut festsetzt bzw. einen Spalt bildet, der einen einwandfreien Schnitt nachteilig beeinträchtigen würde, ist jeder aus Schneidscheibe und Sternelement zusammengesetzten Baueinheit eine Führungsscheibe 16 zugeordnet, die der Schneidscheibe der nächsten Baueinheit radial gegenüberliegend benachbart angeordnet ist. Hierdurch wird eine Gegenschneide gebildet, die einen einwandfreien Schnitt ermöglicht.

Es wird eine axiale Kraftkomponente erzeugt, die einen Anpreßdruck auf die Schneidscheibe bei der Schneidarbeit bewirkt, wenn die Ränder der Führungsscheiben abgeschrägt sind.

Wenn die Ränder der Schneidscheiben entsprechend der Ausführungsform nach Fig. 5 abgeschrägt sind, weisen die Ränder der Führungsscheiben eine angepaßte Abschrägung 17 auf.

Zwischen den herausragenden Spitzen 18 der Sternelemente 14 sind Ausnehmungen 19 vorgesehen, die ein Ineinandergreifen zweier nebeneinander angeordneter Sternelemente erlauben.

## Patentansprüche

1. Als Vorsatzgerät für einen Mähdrescher od.dgl. ausgebildetes Erntegerät zum Ernten von Mais od. anderen Körnerfrüchten und zum nachfolgenden Zerkleinern der Pflanzenstengel, bestehend aus einer Einzugsvorrichtung (6) und einem Pflückspalt (4) zur Trennung der Kolben von der Pflanze und einer nachgeordneten Schneidvorrichtung (7) zum Häckseln der Pflanzenstengel, dadurch gekennzeichnet, daß die Schneidvorrichtung zwei im Abstand angeordnete, gegenläufig drehbare Wellen (5) aufweist, auf denen jeweils mindestens eine Schneidscheibe (7) und der Schneidscheibe benachbart ein Sternelement (8) angeordnet sind, wobei die Schneidränder (9a, 9b) der miteinander zusammenwirkenden Schneidscheiben einander überlappend angeordnet sind und wobei jedes Sternelement an seiner der Schneidscheibe benachbarten Seite eine umlaufende Ausnehmung und im Abstand die Peripherie der Schneidscheibe überragende Zacken (11) aufweist.

2. Erntegerät nach Anspruch 1, dadurch gekennzeichnet, daß mehrere aus Schneidscheibe (7) und Sternelement (8) zusammengesetzte Baueinheiten auf einer gemeinsamen Welle (5) angeordnet sind.

3. Erntegerät nach Anspruch 1, dadurch gekennzeichnet, daß den miteinander zusammenwirkenden Schneidscheiben (7) eine Druckvorrichtung (12a, 12b) zugeordnet ist.

4. Erntegerät nach einem der Ansprüche 1 und 3, dadurch gekennzeichnet, daß die Schneidscheiben (7) und/oder Sternelemente (8) lösbar auf der Welle (5) angeordnet sind.

5. Erntegerät nach einem der Ansprüche 1 bis 4, dadurch gekennzeichnet, daß die Ausnehmung (10) des Sternelementes (8) tiefer als der Überdeckungsbereich zweier zusammenwirkender Schneidscheiben (7a, 7b) ist.

6. Erntegerät nach einem der Ansprüche 1 bis 5, dadurch gekennzeichnet, daß jeder aus Schneidscheibe (13) und Sternelement (14) zusammengesetzten Baueinheit eine Führungsscheibe (16) zugeordnet ist, die der Schneidscheibe der nächsten Baueinheit radial gegenüberliegend benachbart angeordnet ist.

## Claims

1. A harvesting unit for harvesting maize or other cereals and for the subsequent comminution of the stalks and designed as an attachment for a combine harvester or the like, consisting of a front-feed device (6) and a picking gap (4) for separating the heads from the plants and a downstream cutting device (7) for chopping the stalks, characterised in that the cutting device comprises two spaced apart, counter-rotatable shafts (5), on each of which at least one cutting disc (7) and one star element (8) adjacent to the cutting disc are disposed, wherein the cutting edges (9a, 9b) of the cutting discs which cooperate with each other are disposed overlapping each other, and wherein each star element has a surrounding recess on its face adjacent to the cutting disc and has spaced apart prongs (11) protruding beyond the periphery of the cutting disc.

2. A harvesting unit according to claim 1, characterised in that a plurality of structural units assembled from a cutting disc (7) and a star element (8) is disposed on a common shaft (5).

3. A harvesting unit according to claim 1, characterised in that a pressure device (12a, 12b) is associated with the cutting discs (7) which cooperate with each other.

4. A harvesting unit according to one of claims 1 and 3, characterised in that the cutting discs (7) and/or star elements (8) are detachably mounted on the shaft (5).

5. A harvesting unit according to any one of claims 1 to 4, characterised in that the recess (10) in the star element (8) is deeper than the region of overlap of two cooperating cutting discs (7a, 7b).

6. A harvesting unit according to any one of claims 1 to 5, characterised in that a guide segment (16) is associated with each structural unit assembled from a cutting disc (13) and a star element (14), which guide segment is disposed radially opposite and adjacent to the cutting disc of the next structural unit.

## Revendications

1. Adaptateur pour une moissonneuse-batteuse ou pour un autre engin de récolte de conception analogue, destiné à la récolte du maïs ou d'autres céréales et au broyage ultérieur des tiges des plantes, composé d'un dispositif d'alimentation (6) et d'une fente de cueillette (4) destinée à la séparation de l'épi par rapport à la plante, ainsi que d'un dispositif de découpe (7) pour le hachage des tiges, caractérisé en ce que le dispositif de découpe comporte deux arbres (5) pouvant tourner en sens contraires, disposés à une certaine distance l'un de l'autre sur lesquels est respectivement disposé au moins un disque de découpe (7) et un élément en étoile (8) contigu au disque de découpe, les bords tranchants (9a, 9b) des disques de découpe agissant conjointement étant disposés en chevauchement, et en ce que du côté où il est contigu au disque de découpe, chaque élément en étoile comporte un évidement périphérique et des dents (11) disposées à une certaine distance dépassant de la périphérie du disque de découpe.

2. Adaptateur selon la revendication 1, caractérisé en ce que plusieurs unités modulaires composées d'un disque de découpe (7) et d'un élément en étoile (8) sont disposées sur un arbre commun (5).

3. Adaptateur selon la revendication 1, caractérisé en ce qu'un dispositif de pression (12a, 12b) est associé aux disques de découpe (7) agissant conjointement.

4. Adaptateur selon l'une quelconque des revendications 1 et 3, caractérisé en ce que les disques de découpe (7) et/ou les éléments en étoile (8) sont disposés de manière amovible sur l'arbre (5).

5. Adaptateur selon l'une quelconque des revendications 1 à 4, caractérisé en ce que l'évidement (10) de l'élément en étoile (8) est plus profond que la zone de recouvrement de deux disques de découpe (7a, 7b) agissant conjointement.

6. Adaptateur selon l'une quelconque des revendications 1 à 5, caractérisé en ce qu'à chaque unité modulaire composée d'un disque de découpe (13) et d'un élément en étoile (14), est associé un disque de guidage (16) qui est contigu et disposé radialement en face du disque de découpe de l'unité modulaire suivante.
